# EUROPÄISCHE PATENTANMELDUNG

(11) **EP 1 382 631 A1**
(43) Veröffentlichungstag der Anmeldung: **21.01.2004**
(21) Anmeldenummer: 03013314.4
(22) Anmeldetag: 12.06.2003
(51) Int. Cl.: C08G 77/14, C08G 77/38

(54) **Siliconperoxide**

(30) Priorität: 19.07.2002 DE 10232995
(71) Anmelder: Wacker-Chemie GmbH, 81737 München (DE)
(72) Erfinder: Dauth, Jochen, Dr., 84489 Burghausen (DE); Keller, Wolfgang, 84561 Mehring (DE)
(74) Vertreter: Fritz, Helmut, Dr.

(57) **Zusammenfassung**

Gegenstand der Erfindung ist Peroxid funktionelles Organopolysiloxan (P), welches mindestens eine Einheit der allgemeinen Formel (I)

YₐR_{b}SiO_{4-a-b/2} (I),

aufweist, in der
- **Y**: eine Gruppe der allgemeinen Formel (II)

-A-CR''₂-OO-R''' (II),
bedeutet und **R, A, R'', R''', R**^{**2**}**, a** und **b** die in Anspruch 1 angegebenen Bedeutungen aufweisen.

## Beschreibung

Die Erfindung betrifft Peroxid funktionelles Organopolysiloxan.

In beispielsweise JP 2001081187 A2 ist die Reaktion von silicongebundenen Säurechloriden mit niedermolekularen tertiären organischen Hydroperoxiden zu den entsprechenden Peroxyestersiloxanen beschrieben. Bei dem dort beschriebenen Verfahren wird das organische Molekül zunächst peroxidiert, nicht der Siliconteil. Die niedermolekularen Hydroperoxide sind sehr schwer zu handhaben, sie dürfen z.B. nur unter hohen Sicherheitsvorkehrungen versandt werden und neigen zum Zerfall.

Gegenstand der Erfindung ist Peroxid funktionelles Organopolysiloxan (P), welches mindestens eine Einheit der allgemeinen Formel (I)

YₐR_{b}SiO_{4-a-b/2} (I),

aufweist, in der
- **Y**: eine Gruppe der allgemeinen Formel (II)

- A-CR"₂-OO-R'" (II),
- **R**: ein Wasserstoffatom, einen C₁- bis C₁₂-Alkoxy-, Hydroxyoder Alkylglykolrest oder einwertigen, gegebenenfalls Cyano-, Fluor-, Chlor- oder Brom-substituierten C₁- bis C₁₈-Kohlenwasserstoffrest, welcher durch zweibindige, beidseitig an Kohlenstoffatome gebundene Reste aus der Gruppe -O-, -COO-, -OOC-, -CONR¹-, -NR¹CO-und -COunterbrochen sein kann,
- **A**: eine chemische Bindung oder einen zweiwertigen gegebenenfalls Cyano-, Fluor-, Chlor- oder Brom-substituierten C₁- bis C₁₈-Kohlenwasserstoffrest,
- **R''**: einen gegebenenfalls Cyano-, Fluor-, Chlor- oder Brom-substituierten C₁- bis C₁₀-Kohlenwasserstoffrest,
- **R'''**: ein Wasserstoffatom, einen einwertigen C₁- bis C₁₈-Kohlenwasserstoffrest oder C₁- bis C₁₈-Acylrest, welche mit Cyano-, Fluor-, Chlor- Brom- oder Organopolysiloxan substituiert, welche durch zweibindige, beidseitig an Kohlenstoffatome gebundene Reste aus der Gruppe -O-, -COO-, -OOC-, -CONR¹-, -NR¹CO-und -CO- unterbrochen sein können,
- **R**^{**1**}: ein Wasserstoffatom oder einen Rest R'',
- **a**: die Werte 1, 2 oder 3,
- **b**: die Werte 0, 1 oder 2 und
die Summe aus **a + b** die Werte 1, 2 oder 3 bedeuten.

Das Peroxid funktionelle Organopolysiloxan (P) kann definiert, z.B. thermisch oder durch Redoxreaktion zu einem Siliconmakroinitiator zerfallen.

Das Organopolysiloxan (P) kann zur Modifizierung von Organopolysiloxanen eingesetzt werden. Beispielsweise können dadurch in Polymerisate, beispielsweise in radikalisch vernetzbare Siliconkautschuke Siliconbestandteile über das Organopolysiloxan (P) direkt einpolymerisiert werden. Die Siliconkautschuke können dann über Organopolysiloxan (P) radikalisch vernetzt werden, beispielsweise mit am Siliconkautschuk gebundenen Vinylgruppen, beispielsweise bei der Herstellung von Silicon-Heißkautschuk (HTV).

Das Organopolysiloxan (P) kann als Radikalinitiator bei der Synthese von Siliconblock- und -propfcopolymeren durch Polymerisation mit Monomeren eingesetzt werden.

Organopolysiloxan (P), bei dem **R'''** ein Wasserstoffatom bedeutet (Hydroperoxid), bildet beim durch Redoxreaktion verursachten Zerfall des Organopolysiloxans (P) ein radikalisches Polymer, aber kein niedermolekulares Radikal, sondern ein OH-Anion. Das intermediär zu erwartende OH-Radikal wird offenbar so rasch in ein OH-Anion umgewandelt, dass es bei einer radikalischen Polymerisation keine homopolymeren Nebenprodukte bilden kann. Das Organopolysiloxan-Hydroperoxid (P) ist deshalb besonders geeignet als Initiator für Copolymerisationen, die bei Temperaturen unterhalb der kritischen Zerfallstemperatur des Organopolysiloxan-Hydroperoxids (P) (ca.90 °C) durchgeführt werden. Das Organopolysiloxan-Hydroperoxid (P) copolymerisiert daher bei Redoxpolymerisation mit Monomeren zu Block- oder Pfropfcopolymeren ohne störende Bildung von Homopolymeren des Monomeren.

Organopolysiloxan (P) kann auf leichtem, unproblematischem und direktem Weg unter Zuhilfenahme von einfach zu handhabenden Ausgangsmaterialien hergestellt werden.

Im Organopolysiloxan (P) sind die Peroxidgruppen weniger Reaktiv als bei niedermolekularen Peroxiden. Der Peroxidgehalt kann im Organopolysiloxan (P) beliebig eingestellt und durch weitere Siloxaneinheiten so herabgesetzt werden, daß kein Lösungsmittel zur Verdünnung erforderlich ist.

Beispiele für unsubstituierte Reste **R** und **R'''** sind Alkylreste, wie der Methyl-, Ethylrest; Cycloalkylreste, wie Cyclohexylrest; Arylreste, wie der Phenyl-, Biphenylyl-, Naphthyl-, Anthryl- und Phenanthrylrest; Alkarylreste, wie o-, m-, p-Tolylreste, Xylylreste und Ethylphenylreste; Aralkylreste, wie der Benzylrest, der alpha- und der β-Phenylethylrest.

Beispiele für substituierte Kohlenwasserstoffreste als Rest **R** und **R'''** sind halogenierte Kohlenwasserstoffreste; Epoxialkylreste; (Meth)acryloxyalkylreste, Cyanoalkylreste; Aminoalkylreste; Aminoarylreste; quarternäre Ammoniumreste; und Hydroxyalkylreste.

Die Alkoxyreste **R** sind über ein Sauerstoffatom gebundene vorstehend beschriebene Alkylreste. Die Beispiele für Alkylreste **R** gelten im vollen Umfang auch für die Alkoxyreste.

Bei dem Rest **R** handelt es sich bevorzugt um unsubstituierte und substituierte C₁- bis C₁₈-Alkylreste, Wasserstoff und den Phenylrest, insbesondere um den Methyl-, Ethyl-, Propyl-, Octyl-, Hexyl-, Dodecyl-, Octadecyl-, Phenyl-, Vinyl-, Allyl-, Methacryloxypropyl-, 3-Chlorpropyl-, 3-Mercaptopropyl-, 3-Hydroxypropyl-, 3-(2,3-Dihydroxypropoxy)propyl-, 3-Aminopropylund den (2-Aminoethyl)-3-aminopropyl-Rest, Wasserstoff und quarternäre Ammoniumreste.

Bei dem Rest **R'''** handelt es sich bevorzugt um Wasserstoff, unsubstituierte und substituierte C₁- bis C₁₈-Alkylreste, insbesondere um den tert.-Butyl, iso-Propyl-, Octyl-, Hexyl-, Dodecyl-, Octadecylrest.

Bei dem Rest **R''** handelt es sich bevorzugt um unsubstituierte und substituierte C₁- bis C₆-Alkylreste, insbesondere um den Methyl-, Ethyl- und Propylrest.

Beispiele für zweiwertige Kohlenwasserstoffreste **A** sind gesättigte Alkylenreste wie der Methylen- und Ethylenrest, sowie Propylen-, Butylen-, Pentylen-, Hexylen-, Cyclohexylenund Octadecylenreste oder ungesättigte Alkylen- oder Arylenreste, wie der Hexenylenrest und Phenylenreste, insbesondere lineare C₁- bis C₆-Alkylenreste, besonders bevorzugt der Ethylenrest.

Zusätzlich zu den Einheiten der allgemeinen Formel (I) kann das Organopolysiloxan (P) weitere Siloxaneinheiten aufweisen, vorzugsweise solche der allgemeinen Formeln (III), (IV), (V) und (VI)

[R₃SiO_{1/2}] (III),

[R₂SiO_{2/2}] (IV),

[RSiO_{3/2}] (V),

[SiO_{4/2}] (VI),

in denen **R** die vorstehenden Bedeutungen aufweist.

Vorzugsweise enthält das Organopolysiloxan (P)
1 bis 100,0 Mol-% Einheiten der allgemeinen Formel (I),
0 bis 50,0 Mol-% Einheiten der allgemeinen Formel (III),
0 bis 90,0 Mol-% Einheiten der allgemeinen Formel (IV),
0 bis 50,0 Mol-% Einheiten der allgemeinen Formel (V),
0 bis 50,0 Mol-% Einheiten der allgemeinen Formel (VI).

Insbesondere enthält das Organopolysiloxan (P)
1 bis 50,0 Mol-% Einheiten der allgemeinen Formel (I),
0 bis 40,0 Mol-% Einheiten der allgemeinen Formel (III),
10 bis 80,0 Mol-% Einheiten der allgemeinen Formel (IV),
0 bis 10,0 Mol-% Einheiten der allgemeinen Formel (V),
0 bis 10,0 Mol-% Einheiten der allgemeinen Formel (VI).

Das Organopolysiloxan (P) kann als lineares oder cyclisches Molekül vorliegen, die Peroxigruppen können kammartig oder am Kettenende angebunden sein. Das Organopolysiloxan (P) kann auch verzweigt oder vernetzt vorliegen.

Das Organopolysiloxan (P) weist insgesamt mindestens 2, insbesondere mindestens 3 Einheiten der allgemeinen Formeln (I) und (III) bis (VI) auf. Es kann bei 25°C flüssig oder fest vorliegen. Vorzugsweise beträgt die Viskosität bei 25°C höchstens 100 Pas, bevorzugt höchstens 10 Pas, insbesondere höchstens 2 Pas.

Das Peroxid funktionelle Organopolysiloxan (P), welches mindestens eine Einheit der vorstehenden allgemeinen Formel (I) aufweist, kann hergestellt werden durch Umsetzung von Organopolysiloxan (A), welches mindestens eine Einheit- der allgemeinen Formel (VII),

ZₐR_{b}SiO_{4-a-b/2} (VII),

aufweist, in der **Z** eine Gruppe der allgemeinen Formel (VIII)

-A-CR "₂-OH (VIII),

oder in der Z eine Gruppe der allgemeinen Formel (IX)

- A-CR"=CH₂ (IX),

bedeutet, mit H₂O₂, wobei **R, R", a** und **b** die vorstehenden Bedeutungen aufweisen.

Dabei wird Organopolysiloxan (P) erhalten, bei dem **R'''** ein Wasserstoffatom bedeutet.

Das den Rest der allgemeinen Formel (VIII) enthaltende Organopolysiloxan der allgemeinen Formel (VII) kann beispielsweise hergestellt werden durch übergangsmetallkatalysierte Umsetzung von ungesättigten tertiären Alkoholen mit SiH-Bindungen enthaltenden Polysiloxanen (Hydrosilylierung), wie zum Beispiel 2-Methyl-3-buten-2-ol, 2-Hydroxy-2,5-dimethyl-5-hexen, oder H₂C=CMe-Ph-CMe₂OH.
Das den Rest der allgemeinen Formel (IX) enthaltende Organopolysiloxan der allgemeinen Formel (VII) kann beispielsweise hergestellt werden durch übergangsmetallkatalysierte Umsetzung eines solchen Überschusses doppelt ungesättigter, 2-Propenylgruppen enthaltender Verbindungen mit SiH-Bindungen enthaltenden Polysiloxanen (Hydrosilylierung), wie zum Beispiel 2,5-Dimethyl-1,5-hexadien, oder H₂C=CMe-Ph-CMe=CH₂, so daß im Mittel nur eine der Doppelbindungen in der Reaktion verbraucht wird.
Das den Rest der allgemeinen Formel (IX) enthaltende Organopolysiloxan der allgemeinen Formel (VII) kann ebenfalls hergestellt werden durch Si-C-Kopplungsreaktionen unter Verwendung metallorganischer Reagenzien, beispielsweise durch Reaktion von SiCl-Gruppen enthaltendem Polysiloxan mit Grignard-Reagenzien der Formel H₂C=CMe-MgCl oder H₂C=CMe-CH₂MgCl, oder anderen metallorganischen Kopplungsreagienzien.

Zur Herstellung der Organopolysiloxane (P), bei denen **R'''** einen einwertigen C₁- bis C₁₈-Kohlenwasserstoffrest oder C₁bis C₁₈-Acylrest, welche mit Cyano-, Fluor-, Chlor- Brom- oder Organopolysiloxan substituiert, welche durch zweibindige, beidseitig an Kohlenstoffatome gebundene Reste aus der Gruppe -O-, -COO-, -OOC-, -CONR¹-, -NR¹CO-und -CO- unterbrochen sein können, bedeutet, wird Organopolysiloxan (P), bei dem **R'''** ein Wasserstoffatom bedeutet, mit der Verbindung der allgemeinen Formel (X)

XR'" (X),

umgesetzt, wobei
- **R'''**: einen einwertigen C₁- bis C₁₈-Kohlenwasserstoffrest oder C₁- bis C₁₈-Acylrest, welche mit Cyano-, Fluor-, Chlor-Brom- oder Organopolysiloxan substituiert, welche durch zweibindige, beidseitig an Kohlenstoffatome gebundene Reste aus der Gruppe -O-, -COO-, -OOC-, -CONR¹-, -NR¹CO-und -COunterbrochen sein können und
- **X**: Fluor, Chlor, Brom, Hydroxyl, Wasserstoff oder Säureanhydridrest bedeuten.

Wenn **X** Wasserstoff bedeutet, kann die Umsetzung beispielsweise zusammen mit CuCl erfolgen.
Wenn **X** Fluor, Chlor, Brom bedeutet, kann die Umsetzung beispielsweise zusammen mit Dicyclohexylcarbodiimid erfolgen. Wenn **R'''** Acylrest bedeutet und **X** Säureanhydridrest bedeutet, kann die Umsetzung beispielsweise zusammen mit CuCl erfolgen.

Die Umsetzung von Organopolysiloxan (A) mit H₂O₂ findet vorzugsweise unter Säurekatalyse statt. Bevorzugt sind starke Säuren, wie Schwefelsäure.

Die Umsetzung von Organopolysiloxan (A) mit H₂O₂ erfolgt vorzugsweise in einer Lösung oder Dispersion des Organopolysiloxans (A). Vorzugsweise werden Alkohole oder ähnlichen polare Lösemittel eingesetzt.

Die Umsetzung von Organopolysiloxan (A) mit H₂O₂ erfolgt vorzugsweise bei 20 bis 100°C.

Organopolysiloxan (A) ist an sich bekannt. Es kann beispielsweise hergestellt werden durch Addition von aliphatisch ungesättigten tertiären Alkoholen an SiH-Gruppen aufweisende Organopolysiloxane.

Alle vorstehenden Symbole der vorstehenden Formeln weisen ihre Bedeutungen jeweils unabhängig voneinander auf.

In den folgenden Beispielen sind, falls jeweils nicht anders angegeben, alle Mengen- und Prozentangaben auf das Gewicht bezogen, alle Drücke 0,10 MPa (abs.) und alle Temperaturen 20°C.

### Beispiel 1:

In einem gerührten, mit Rückflußkühler ausgestatteten 2 Liter Dreihalskolber werden 1000 Gramm eines Polydimethylwasserstoffsiloxans mit endständigen SiH-Gruppen (Aktivwasserstoffgehalt 0,055 Gew.-%) vorgelegt, der Kolben mit Stickstoff gespült und auf 90°C aufgeheizt. Anschließend werden über einen aufgesetzten Tropftrichter innerhalb von 60 Minuten 52,03 Gramm 2-Methyl-3-buten-2-ol dosiert, welche vorher mit 0.5 Gramm einer 1.1 Gew% Platin (IV) enthaltenden Katalysatorlösung (Hexachloroplatinsäure in Isopropanol, "Speier-Katalysator") versetzt wurden. Die Dosierung erfolgt so, daß der Siedepunkt der Reaktionsmischung nicht überschritten wird. Nach Ende der Dosierung werden nochmals 0,2 g der Katalysatorlösung hinzugefügt, und weitere 60 Minuten bei 100°C gerührt. Überschüssiges Methylbutenol wird am Rotationsverdampfer bei 100°C und 5 mbar abgezogen und das erhaltene Produkt über eine Druckfilternutsche filtriert. Die erfolgreiche Umsetzung zu dem entsprechenden Hydrosilylierungsprodukt wird durch 1H-NMR bestätigt.

### Beispiel 2:

In einem gerührten, mit Rückflußkühler ausgestatteten 2 Liter Dreihalskolber werden 1000 Gramm eines Polydimethylwasserstoffsiloxans mit seitenständigen SiH-Gruppen (Aktivwasserstoffgehalt 0,32 Gew.-%) vorgelegt, der Kolben mit Stickstoff gespült und auf 90°C aufgeheizt. Anschließend werden über einen aufgesetzten Tropftrichter innerhalb von 60 Minuten 309 Gramm 2-Methyl-3-buten-2-ol dosiert, welche vorher mit 0.6 Gramm einer 1,1 Gew% Platin (IV) enthaltenden Katalysatorlösung (Hexachloroplatinsäure in Isopropanol, "Speier-Katalysator") versetzt wurden. Die Dosierung erfolgt so, daß der Siedepunkt der Reaktionsmischung nicht überschritten wird. Nach Ende der Dosierung werden nochmals 0,2 g der Katalysatorlösung hinzugefügt, und weitere 60 Minuten bei 100°C gerührt.
Überschüssiges Methylbutenol wird am Rotationsverdampfer bei 100°C und 5 mbar abgezogen und das erhaltene Produkt über eine Druckfilternutsche filtriert. Die erfolgreiche Umsetzung zu dem entsprechenden Hydrosilylierungsprodukt wird durch 1H-NMR bestätigt.
Das Hydrosilylierungsprodukt weist eine Kettenlänge von 30-40, 8-10 tertiäre OH-Seitengruppen und 4,15 Gew.-% OH auf.

### Beispiel 3:

In einem gerührten, mit Rückflußkühler ausgestatteten 3 Liter Dreihalskolben werden 500 Gramm eines Tetramethyldisiloxans mit seitenständigen SiH-Gruppen (Aktivwasserstoffgehalt 1.5 Gew.-%) vorgelegt, der Kolben mit Stickstoff gespült und auf 90°C aufgeheizt. Anschließend werden über einen aufgesetzten Tropftrichter innerhalb von 120 Minuten 1370 Gramm 2-Methyl-3-buten-2-ol dosiert, welche vorher mit 0.9 Gramm einer 1.1 Gew% Platin (IV) enthaltenden Katalysatorlösung (Hexachloroplatinsäure in Isopropanol, "Speier-Katalysator") versetzt wurden. Die Dosierung erfolgt so, daß der Siedepunkt der Reaktionsmischung nicht überschritten wird. Nach Ende der Dosierung werden nochmal-s 0.3 g der Katalysatorlösung hinzugefügt, und weitere 60 Minuten bei 100°C gerührt. Überschüssiges Methylbutenol wird am Rotationsverdampfer bei 100°C und 5 mbar abgezogen und das erhaltene Produkt über eine Druckfilternutsche filtriert. Die erfolgreiche Umsetzung zu dem entsprechenden Hydrosilylierungsprodukt wird durch 1H-NMR bestätigt.

### Beispiel 4

In einem gerührten, mit Rückflußkühler ausgestatteten 2 Liter Dreihalskolber werden 1000 Gramm eines Polydimethylwasserstoffsiloxans mit endständigen SiH-Gruppen (Aktivwasserstoffgehalt 0,17 Gew.-%) vorgelegt, der Kolben mit Stickstoff gespült und auf 90°C aufgeheizt. Anschließend werden über einen aufgesetzten Tropftrichter innerhalb von 60 Minuten 156,1 Gramm 2-Methyl-3-buten-2-ol dosiert, welche vorher mit 0.5 Gramm einer 1,1 Gew% Platin (IV) enthaltenden Katalysatorlösung (Hexachloroplatinsäure in Isopropanol, "Speier-Katalysator") versetzt wurden. Die Dosierung erfolgt so, daß der Siedepunkt der Reaktionsmischung nicht überschritten wird. Nach Ende der Dosierung werden nochmals 0,2 g der Katalysatorlösung hinzugefügt, und weitere 60 Minuten bei 100°C gerührt. Überschüssiges Methylbutenol wird am Rotationsverdampfer bei 100°C und 5 mbar abgezogen und das erhaltene Produkt über eine Druckfilternutsche filtriert. Die erfolgreiche Umsetzung zu dem entsprechenden Hydrosilylierungsprodukt wird durch 1H-NMR bestätigt.
Das Hydrosilylierungsprodukt weist eine Kettenlänge von 15 bis 20, endständige und tertiäre OH-Gruppen, 2,75 Gew.-% OH auf.

### Beispiel 5

Herstellung von Polysiloxanhydroperoxid aus Polysiloxanpolyol hergestellt nach Beispiel 2 mit alkoholischem Lösungsmittel

| Rohstoffe: | | |
|---|---|---|
| H₂O₂ - 70 %-ig | 300 g | |
| H₂SO₄ - 72 %-ig | 200 g | |
| Turpinal ® SL | 5 ml | (Komplexbildner auf Phosphorsäurebasis) |
| Siliconcopolyol | 500 g | (ca. 1,22 Mol OH-Gruppen) |
| nach Beispiel 2 | | |
| Ethanol | 125 g | |

### Verfahren:

H₂O₂, H₂SO₄ und Turpinal ® werden vorgelegt bei ca. 25 °C. Die Mischung Siliconcopolyol/Ethanol wird zugetropft bei ca. 30 °C in etwa 30 Minuten.
Die Mischung wird auf 35 °C aufgeheizt und 30 Minuten gerührt, dann wird auf 50 °C aufgeheizt und weitere 45 Minuten gerührt. Nach Abkühlen auf 25 °C werden 500 g.5 % (NH₄)₂SO₄-Lösung zugegeben, 5 Minuten gerührt und 40 Minuten getrennt. (712 g leicht trübe, wässrige Phase).

Die organische Phase wird noch viermal mit je 500 g 10 % (NH₄)₂SO₄-Lösung gewaschen, Trennzeit jeweils 45 Minuten, wässrige Phasen klar.

Die organische Phase lässt man bis zum nächsten Tag stehen und trennt nochmals wässrige Phase ab.

### Produkt:

520 g zähe, trübe Flüssigkeit.
Aktivsauerstoffgehalt: 3,01 % (entspr. 6,2 Gew.-% OOH-Gruppen, ca. 80 % Umsatz der OH-Gruppen).

### Beispiel 6

Herstellung von Polysiloxanhydroperoxid aus Polysiloxanpolyol hergestellt nach Beispiel 4 ohne Lösungsmittel.

| Rohstoffe: | | |
|---|---|---|
| H₂O₂ - 70 % | 240 g | |
| H₂SO₄ - 72 % | 160 g | |
| Turpinal ® SL | 2 ml | |
| Siliconcopolyol | 370 g | (ca. 0,6 Mol OH-Gruppen) |

### Verfahren:

H₂O₂, H₂SO₄ und Turpinal® werden bei ca. 25 °C vorgelegt. Das Siliconcopolyol wird in 30 bis 40 Minuten bei ca. 30 °C zugetropft. Die Mischung wird auf 35 °C aufgeheizt und 90 Minuten gerührt, dann wird auf 50 °C aufgeheizt und weitere 30 Minuten gerührt. Nach Abkühlen auf 25 °C werden die Phasen 30 Minuten getrennt (375 g klare, wässrige Phase).

Die organische Phase wird dreimal mit je 300 ml 5 % (NH₄)₂SO₄- Lösung gewaschen (Trennzeit jeweils 30 Minuten, wässrige Phasen klar, organische Phase trüb). Mit 30 g wasserfreiem Na₂SO₄ wird 30 Minuten gerührt und filtriert.

### Produkt:

358 g klare, farblose, etwas viskose Flüssigkeit.
Aktivsauerstoffgehalt: 2,52 % (entspricht 5,2 Gew.-% OOH-Gruppen, ca. 100 % Umsatz der OH-Gruppen).

## Patentansprüche

1. Peroxid funktionelles Organopolysiloxan (P), welches mindestens eine Einheit der allgemeinen Formel (I)
YₐR_{b}SiO_{4-a-b/2} (I),
aufweist, in der
**Y** eine Gruppe der allgemeinen Formel (II)
-A-CR"₂-OO-R'" (II),
**R** ein Wasserstoffatom, einen C₁- bis C₁₂-Alkoxy-, Hydroxyoder Alkylglykolrest oder einwertigen, gegebenenfalls Cyano-, Fluor-, Chlor- oder Brom-substituierten C₁- bis C₁₈-Kohlenwasserstoffrest, welcher durch zweibindige, beidseitig an Kohlenstoffatome gebundene Reste aus der Gruppe -O-, -COO-, -OOC-, -CONR¹-, -NR¹CO-und -COunterbrochen sein kann,
**A** eine chemische Bindung oder einen zweiwertigen gegebenenfalls Cyano-, Fluor-, Chlor- oder Brom-substituierten C₁- bis C₁₈-Kohlenwasserstoffrest,
**R''** einen gegebenenfalls Cyano-, Fluor-, Chlor- oder Brom-substituierten C₁- bis C₁₀-Kohlenwasserstoffrest,
**R'''** ein Wasserstoffatom, einen einwertigen C₁- bis C₁₈-Kohlenwasserstoffrest oder C₁- bis C₁₈-Acylrest, welche mit Cyano-, Fluor-, Chlor- Brom- oder Organopolysiloxan substituiert, welche durch zweibindige, beidseitig an Kohlenstoffatome gebundene Reste aus der Gruppe -O-, -COO-, -OOC-, -CONR¹-, -NR¹CO-und -CO- unterbrochen sein können,
**R**^{**1**} ein Wasserstoffatom oder einen Rest **R''**,
**a** die Werte 1, 2 oder 3,
**b** die Werte 0, 1 oder 2 und
die Summe aus **a + b** die Werte 1, 2 oder 3 bedeuten.

2. Peroxid funktionelles Organopolysiloxan (P) nach Anspruch 1, bei dem **R** einen unsubstituierte oder substituierten C₁bis C₁₈-Alkylrest, Wasserstoff oder Phenylrest bedeutet.

3. Peroxid funktionelles Organopolysiloxan (P) nach Anspruch 1 oder 2, bei dem **R'''** Wasserstoff, oder einen unsubstituierten oder substituierten C₁- bis C₁₈-Alkylrest bedeutet.

4. Peroxid funktionelles Organopolysiloxan (P) nach Anspruch 1 bis 3, bei dem **R''** einen unsubstituierten oder substituierten C₁- bis C₆-Alkylrest bedeutet.

5. Peroxid funktionelles Organopolysiloxan (P) nach Anspruch 1 bis 4, bei dem **A** einen linearen C₁- bis C₆-Alkylenrest bedeutet.

6. Peroxid funktionelles Organopolysiloxan (P) nach Anspruch 1 bis 5, welches zusätzlich zu den Einheiten der allgemeinen Formel (I) Siloxaneinheiten aufweist, die ausgewählt werden aus Siloxaneinheiten der allgemeinen Formeln (III), (IV), (V) und (VI)
[R₃SiO_{1/2}] (III),
[R₂SiO_{2/2}] (IV),
[RSiO_{3/2}] (V),
[SiO_{4/2}] (VI),
in denen **R** die in Anspruch 1 angegebenen Bedeutungen aufweist.

7. Verwendung von Peroxid funktionellem Organopolysiloxan (P) gemäss Anspruch 1 bis 6 zur Modifizierung von Organopolysiloxanen.

8. Verwendung nach Anspruch 7, wobei radikalisch vernetzbare Siliconkautschuke über Organopolysiloxan (P) radikalisch vernetzt werden.

9. Verwendung nach Anspruch 7, wobei das Organopolysiloxan (P) als Radikalinitiator bei der Synthese von Siliconblock- und -propfcopolymeren durch Polymerisation mit Monomeren eingesetzt wird.
